# EUROPEAN PATENT APPLICATION

(11) **EP 2 613 383 A1**
(43) Date of publication of application: **10.07.2013**
(21) Application number: 11821419.6
(22) Date of filing: 30.06.2011
(51) Int. Cl.: H01M 4/42, H01M 4/133, H01M 4/134, H01M 4/36, H01M 4/38, H01M 4/46, H01M 4/505, H01M 4/525

(54) **NON-AQUEOUS ELECTROLYTE RECHARGEABLE BATTERY**

(30) Priority: 28.02.2011 JP 2011041823; 03.09.2010 JP 2010197977
(71) Applicant: Sanyo Electric Co., Ltd., Osaka 570-8677 (JP)
(72) Inventor: TAKAHASHI, Yasufumi, Kobe-shi Hyogo 651-2242 (JP); FUJIMOTO, Masahisa, Kobe-shi Hyogo 651-2242 (JP)
(74) Representative: Glawe, Delfs, Moll
(86) International application number: PCT/JP2011/065056
(87) International publication number: WO 2012/029401

(57) **Abstract**

A non-aqueous electrolyte secondary battery exhibits good high-rate charge/discharge characteristic and good charge/discharge cycle property even when the packing density of the negative electrode is increased. The non-aqueous electrolyte secondary battery includes a positive electrode containing a positive electrode active material, a negative electrode containing a negative electrode active material, and a nonaqueous electrolyte, in which the negative electrode active material is a mixture of a carbon material and metal particles of at least one selected from zinc, aluminum, tin, calcium, and magnesium.

## Description

### Technical Field

The present invention relates to a nonaqueous electrolyte secondary battery that uses an improved negative electrode active material in a negative electrode.

### Background Art

In recent years, nonaqueous electrolyte secondary batteries that can be charged and discharged through migration of lithium ions between a positive electrode and a negative electrode have been increasingly used as power sources of portable electronic appliances etc.

Recently, remarkable progress has been made in the reduction of size and weight of mobile appliances such as cellular phones, notebook personal computers, and PDAs. Furthermore, increased versatility of these appliances has led to an increase in power consumption. There is thus a growing demand also for nonaqueous electrolyte secondary batteries used as power sources of these appliances to achieve higher capacity and higher energy density.

Examples of positive electrode active materials typically used in positive electrodes of nonaqueous electrolyte secondary batteries include lithium cobalt oxide or LiCoO₂, spinel lithium manganese oxide or LiMn₂O₄, cobalt nickel manganese lithium complex oxides, aluminum nickel manganese lithium complex oxides, and aluminum nickel cobalt lithium complex oxides. Examples of the negative electrode active materials typically used in negative electrodes include metallic lithium, carbon such as graphite, and materials, such as silicon and tin, that alloy with lithium as described in Non-Patent Literature 1.

Use of metallic lithium as a negative electrode active material causes problems concerning battery life and safety in that metallic lithium is difficult to handle and dendrites, i.e., needle-like metallic lithium, occur as a result of charging and discharging, causing internal short-circuiting between the negative electrode and the positive electrode.

When a carbon material is used as a negative electrode active material, dendrites do not occur. In particular, there are advantages of using graphite among carbon materials, such as high chemical durability and structural stability, high capacity per unit mass, high reversibility of lithium intercalation-deintercalation reactions, low operation potential, and good flatness. Because of these advantages, carbon materials are widely used to power portable appliances, for example.

However, graphite is disadvantageous in that the theoretical capacity of its intercalation compound LiC₆ is 372 mAh/g and thus the demand for high capacity and high energy density described above cannot be fully satisfied.

In order to obtain a nonaqueous electrolyte secondary battery having high capacity and high energy density by using graphite, it has been a typical practice to tightly compact a negative electrode mix containing graphite whose primary particle shape is flake-like and attach the resulting compact to a collector so as to increase the packing density of the negative electrode mix and increase the capacity of the nonaqueous electrolyte secondary battery relative to the volume.

However, when a negative electrode mix containing graphite is compacted to increase the packing density, the graphite whose primary particle shape is flake-like becomes highly oriented and the ion diffusion rate in the negative electrode mix is decreased. Thus, problems such as a decrease in discharge capacity, an increase in operation potential during discharge, and a decrease in energy density have occurred.

In recent years, Si, Sn, and alloys thereof have been proposed as a negative electrode active material that can yield a high capacity density and a high energy density on a mass ratio basis. While these materials exhibit high capacity per unit mass, i.e., 4198 mAh/g for Si and 993 mAh/g for Sn, they also have drawbacks such as high operation potential during discharge compared to graphite negative electrodes and occurrence of volumetric expansion and contraction during charging and discharging, resulting in easily degradable cycle property.

Examples of the elements that are known to form alloys with lithium include tin, silicon, magnesium, aluminum, calcium, zinc, cadmium, and silver.

Patent Literature 1 discloses use of a negative electrode material that contains a carbonaceous material, a graphite material, and nanometal fine particles composed of a metal element selected from Ag, Zn, Al, Ga, In, Si, Ge, Sn, and Pb and having an average particle diameter 10 nm or more and of 200 nm or less.

According to Patent Literature 1, the influence of crumbling of particles caused by expansion and contraction of particles due to repeated charging and discharging is suppressed and the cycle property is improved by using nanometal fine particles having a very small average particle diameter from the start.

Patent Literature 2 discloses use of a mixture containing graphite and a conductive aid which is carbon particles supporting a metal that forms an alloy with lithium. It is disclosed that in this case, the particle diameter of carbon particles supporting metal particles is smaller than the particle diameter of graphite.

However, even when nanometal particles having a very small average particle diameter are used as described in Patent Literature 1, the cycle property is still degraded in the case where the packing density of the negative electrode is increased to obtain a high-capacity, high-energy-density battery.

Moreover, the particle diameter of metal particles supported on the carbon particles used in Patent Literature 2 is described as being preferably 500 nm or less. When the diameter of the metal particles is large, large volume changes occur and the particles readily collapse, resulting in degradation of the cycle property.

### Citation List

### Patent Literature

PTL 1: Japanese Unexamined Patent Application Publication No. 2004-213927
PTL 2: Japanese Unexamined Patent Application Publication No. 2000-113877

### Summary of Invention

### Technical Problem

An object of the present invention is to provide a nonaqueous electrolyte secondary battery that can achieve good high-rate charge/discharge characteristic and good charge/discharge cycle property even when the packing density of the negative electrode is increased.

### Solution to Problem

The present invention provides a nonaqueous electrolyte secondary battery that includes a positive electrode containing a positive electrode active material, a negative electrode containing a negative electrode active material, and a nonaqueous electrolyte, in which the negative electrode active material is a mixture of a carbon material and metal particles of at least one selected from zinc, aluminum, tin, calcium, and magnesium.

According to the present invention, good high-rate charge/discharge characteristic and good charge/discharge cycle property can be achieved even when the packing density of the negative electrode is increased.

The metal particles are preferably metal particles of at least one selected from zinc and aluminum.

The metal particles are preferably contained in an amount of 1 to 50 mass%, more preferably 1 to 30 mass%, and yet more preferably 5 to 30 mass% relative to the total of the metal particles and the carbon material.

The packing density of the negative electrode is preferably 1.7 g/cm³ or more, more preferably 1.7 g/cm³ or more and 3.0 g/cm³ or less, and yet more preferably 1.8 g/cm³ or more and 2.5 g/cm³ or less.

The positive electrode active material preferably contains a lithium nickel cobalt manganese complex oxide.

The metal particles preferably have an average particle diameter of 0.25 to 50 µm, more preferably 1 to 20 µm, and yet more preferably 4 to 20 µm.

### Advantageous Effects of Invention

According to the present invention, good high-rate charge/discharge characteristic and good charge/discharge cycle property can be achieved even when the packing density of the negative electrode is increased.

### Brief Description of Drawings

[Figure 1] Figure 1 is a schematic cross-sectional view of a test cell prepared in Examples of the present invention.
[Figure 2] Figure 2 is a SEM image of a surface of a negative electrode after charging and discharging magnified by 1000 in Example 3 according to the present invention.
[Figure 3] Figure 3 is a SEM backscattered electron image of a surface of a negative electrode after charging and discharging magnified by 1000 in Example 3 according to the present invention.
[Figure 4] Figure 4 is a SEM image of a surface of a negative electrode after charging and discharging magnified by 1000 in Example 6 according to the present invention.
[Figure 5] Figure 5 is a SEM backscattered electron image of a surface of a negative electrode after charging and discharging magnified by 1000 in Example 6 according to the present invention.
[Figure 6] Figure 6 is a SEM image of a surface of a negative electrode after charging and discharging magnified by 1000 in Comparative Example 1.
[Figure 7] Figure 7 is a SEM image of a surface of a negative electrode after charging and discharging magnified by 1000 in Comparative Example 2.
[Figure 8] Figure 8 is a SEM backscattered electron image of a surface of a negative electrode after charging and discharging magnified by 1000 in Comparative Example 2. Description of Embodiments

The present invention will now be described in further detail.

### [Negative electrode]

### <Metal particles>

The metal particles used in the present invention are metal particles of at least one selected from zinc, aluminum, tin, calcium, and magnesium. These metals have a maximum expansion ratio in the range of 1.5 to 4.0 when alloyed with lithium. When the packing density of the negative electrode containing graphite as a negative electrode active material is increased to 1.7 g/cm³ or higher, the active material becomes oriented and the electrolyte solution does not easily penetrate the electrode. The maximum expansion ratio of graphite typically used as a negative electrode active material is 1.12. Thus, when graphite alone is used as an active material, the electrode expands little during initial charging, passages for the electrolyte solution are not formed, and thus the electrolyte solution does not smoothly penetrate the electrode. Accordingly, the ratio of the active material utilization is not improved and high capacity is not obtained.

When a material such as silicon having a maximum expansion ratio of 4.83 is used and this material is mixed with a carbon material such as graphite, silicon alloys with lithium and expands during initial charging, thereby creating cracks in the negative electrode mix portion and forming passages for the electrolyte solution. As a result, a high initial discharge capacity is achieved. However, silicon expands and contracts significantly by charge and discharge, cracks, and easily crumbles. Thus, as the charge/discharge cycle is repeated, the electrode structure changes, the power collecting ability is degraded, and the battery can no longer be charged or discharged.

In contrast, when a metal having a maximum expansion ratio of 1.5 to 4.0 when alloyed with lithium, i.e., metal particles of at least one selected from zinc, aluminum, tin, calcium, and magnesium, is mixed with a carbon material such as graphite, the metal alloys with lithium during initial charging and undergoes an appropriate degree of expansion and contraction, thereby creating cracks serving as passages for the electrolyte solution in the negative electrode. Accordingly, a high initial discharge capacity and good charge/discharge cycle property can be achieved.

Zinc, aluminum, calcium, and magnesium having an ionization tendency higher than hydrogen readily react with moisture in air when the average particle diameter thereof is as small as that of nanometal fine particles. In particular, aluminum, calcium, and magnesium have a high ionization tendency and care must be taken since they exhibit high reactivity with moisture. When the particle diameter of the metal particles is excessively small, the specific surface increases, the metal particle surfaces become oxidized, and the purity tends to decrease.

When the average particle diameter is excessively large, the charge/discharge characteristic after the first cycle is affected and these metals settle during preparation of a negative electrode mix slurry and do not easily disperse uniformly in the negative electrode mix. Accordingly, the effect of the present invention achieved by mixing the metal particles and a carbon material may not be fully yielded.

Accordingly, in the present invention, metal particles having an average particle diameter in the range of 0.25 to 50 µm are preferably used. A more preferable range of the average particle diameter is 1 to 20 µm and a yet more preferable range is 4 to 20 µm.

In the present invention, as discussed above, because metal particles having a particular average particle diameter and an appropriate expansion ratio are mixed with a carbon material, penetration of the electrolyte solution can be improved and good high-rate charge/discharge characteristics and good cycle property can be achieved after the first cycle despite a high negative electrode packing density.

### <Carbon material>

Examples of the carbon material used in the present invention include graphite, petroleum coke, coal coke, carbides of petroleum pitch, carbides of coal pitch, carbides of resins such as phenol resin and crystal cellulose resin, carbons prepared by partly carbonating these materials, furnace black, acetylene black, pitch carbon fibers, and PAN carbon fibers. From the viewpoints of electrical conductivity and capacity density, graphite is preferably used.

Graphite has a crystal lattice constant of 0.337 nm or less and preferably has a high crystallinity since high electrical conductivity, high capacity density, low operation potential, and high operation voltage as a battery are achieved.

When graphite having a large diameter is used as carbon, the contact property with the metal described above is degraded and the electrical conductivity at the negative electrode is degraded. In contrast, when the particle diameter is excessively small, the number of inactive sites increases with the specific surface, thereby degrading the charge/discharge efficiency. Accordingly, the average particle diameter of the carbon material in the present invention is preferably in the range of 1 to 30 µm and more preferably 5 to 30 µm.

### <Mixing metal particles and carbon material>

In missing the metal particles and the carbon material, the content of the metal particles is preferably in a range of 1 to 50 mass%, more preferably 1 to 30 mass%, and yet more preferably 5 to 30 mass% relative to the total of the metal particles and the carbon material. When the metal particle content is excessively small, the effect of mixing the metal particles is not fully exhibited. When the metal particle content is excessively large, excessive growth of cracks and collapse of the negative electrode structure may result.

In order to uniformly disperse the metal particles in the negative electrode mix, the metal particles and the carbon material are preferably mechanically mixed by using a mixer or a kneader such as a mortar, a ball mill, a mechanofusion system, or a jet mill.

### <Preparation of negative electrode>

A negative electrode in the present invention can be prepared by preparing a negative electrode mix slurry containing a negative electrode active material and a binder, applying the negative electrode mix slurry to a collector such as a copper foil, drying the applied slurry, and rolling the dried slurry by using a rolling roller. Since zinc, aluminum, tin, calcium, and magnesium have high ionization tendency and elute into water, an aprotic solvent such as N-methyl-2-pyrrolidone must be used as the solvent used in preparing the negative electrode mix slurry.

The packing density of the negative electrode is preferably 1.7 g/cm³ or more, more preferably 1.8 g/cm³ or more, and most preferably 1.9 g/cm³ or more. A negative electrode that yields high capacity and high energy density can be prepared by increasing the packing density of the negative electrode. According to the present invention, good high-rate charge/discharge characteristic and good charge/discharge cycle property can be obtained even when the packing density of the negative electrode is increased.

The upper limit of the packing density of the negative electrode is not particularly limited but is preferably 3.0 g/cm³ or less and more preferably 2.5 g/cm³ or less.

Examples of the binder that can be used include polyvinylidene fluoride, polytetrafluoroethylene, EPDM, SBR, NBR, fluororubber, and imido resin.

### [Positive electrode]

Positive electrode active materials commonly used in nonaqueous electrolyte secondary batteries can be used as the positive electrode active material used in the positive electrode of the present invention. Examples thereof include lithium cobalt complex oxides (e.g., LiCoO₂), lithium nickel complex oxides (e.g., LiNiO₂), lithium manganese complex oxides (e.g., LiMn₂O₄ or LiMnO₂), lithium nickel cobalt complex oxides (e.g., LiNi₁₋ₓCoₓO₂), lithium manganese cobalt complex oxides (e.g., LiMn₁₋ₓCoₓO₂), lithium nickel cobalt manganese complex oxides (e.g., LiNiₓCo_{y}Mn_{z}O₂ (x + y + z = 1)), lithium nickel cobalt aluminum complex oxides (e.g., LiNiₓCo_{y}Al_{z}O₂ (x + y + z = 1)), lithium transition metal oxides, manganese dioxide (e.g., MnO₂), polyphosphate compounds such as LiFePO₄ and LiMPO₄ (M represents a metal element), metal oxides such as vanadium oxides (e.g., V₂O₅), and other oxides and sulfides.

In order to increase the capacity density of a battery, the positive electrode active material in the positive electrode used in combination with the above-described negative electrode is preferably a lithium cobalt complex oxide containing cobalt having high operation potential, e.g., a lithium cobalt oxide LiCoO₂, a lithium nickel cobalt complex oxide, a lithium nickel cobalt manganese complex oxide, a lithium manganese cobalt complex oxide, or a mixture thereof. In order to obtain a battery having a high capacity, a lithium nickel cobalt complex oxide or a lithium nickel cobalt manganese complex oxide is more preferably used.

The material for the positive electrode collector of the positive electrode may be any electrically conductive material, e.g., aluminum, stainless steel, or titanium. Examples of the conductive agent in the positive electrode include acetylene black, graphite, and carbon black. Examples of the binder in the positive electrode include polyvinylidene fluoride, polytetrafluoroethylene, EPDM, SBR, NBR, and fluororubber.

### [Nonaqueous electrolyte]

Nonaqueous electrolytes commonly used in nonaqueous electrolyte secondary batteries can be used as the nonaqueous electrolyte used in the present invention. For example, a nonaqueous electrolyte solution in which a solute is dissolved in a nonaqueous solvent or a gel-type polymer electrolyte in which a polymer electrolyte such as polyethylene oxide or polyacrylonitrile is impregnated with a nonaqueous solution can be used.

Nonaqueous solvents commonly used in nonaqueous electrolyte secondary batteries can be used as the nonaqueous solvent. Examples thereof include cyclic carbonates and linear carbonates. Examples of the cyclic carbonates include ethylene carbonate, propylene carbonate, butylene carbonate, vinylene carbonate, and fluorine derivatives thereof. Preferably, ethylene carbonate or fluoroethylene carbonate is used. Examples of the linear carbonates include dimethyl carbonate, methyl ethyl carbonate, diethyl carbonate, and fluorine derivatives thereof such as methyl-2,2,2-trifluoroethyl and methyl-3,3,3-trifluoropropionate. A mixed solvent containing two or more types of nonaqueous solvents can be used. In particular, a mixed solvent containing a cyclic carbonate and a linear carbonate is preferably used. Especially when a negative electrode in which the packing density of the negative electrode mix is high is used as mentioned above, a mixed solvent containing 35 vol% or less of a cyclic carbonate is preferably used to increase the penetrability into the negative electrode. A mixed solvent containing the above-described cyclic carbonate and an ether solvent such as 1,2-dimethoxyethane or 1,2-diethoxyethane is also preferable.

The solute may be any solute commonly used in nonaqueous electrolyte secondary batteries. Examples thereof include LiPF₆, LiBF₄, LiCF₃SO₃, LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃, LiClO₄, Li₂B₁₀Cl₁₀, and Li₂B₁₂Cl₁₂, which may be used alone or in combination.

As described above, according to the present invention, since a mixture of metal particles and a carbon material is used as the negative electrode active material, crumbling which would occur in the case where silicon is used due to expansion and contraction of metal during charging and discharging can be suppressed. Moreover, degradation of power collecting ability of the negative electrode that would occur in cases where metal particles alone are used due to expansion and contraction of the metal can be suppressed.

When the packing density of the negative electrode is increased, gaps are locally formed between the metal particles and the carbon material and the penetrability of the nonaqueous electrolyte is improved. As a result, a nonaqueous electrolyte secondary battery that has high capacity, high energy density, good high-rate charge/discharge characteristics, and good charge/discharge cycle property can be obtained.

### Examples

The present invention will now be described by way of specific examples which do not limit the scope of the present invention. Alterations and modifications are possible without departing from the spirit of the present invention.

### (Example 1)

Spherical zinc (produced by Kishida Chemical Co., Ltd., special grade, product number 000-87575) having an average particle diameter of 4.5 µm and prepared by an atomizing method was used as the first negative electrode active material. Artificial graphite having an average particle diameter of 23 µm and a crystal lattice constant of 0.3362 nm was used as the second negative electrode active material. The average particle diameter of the zinc and artificial graphite was measured with a laser diffraction particle size distribution meter (produced by Shimadzu Corporation, SALAD-2000). The average particle diameters of the metal particles described below were also measured in the same manner.

The first negative electrode active material and the second negative electrode active material were mixed with each other at a mass ratio of 5:95. To the resulting mixture, polyvinylidene fluoride serving as a binder and N-methyl-2-pyrrolidone serving as a solvent were added so that the mass ratio of the negative electrode active material to the binder was 90:10. As a result, a negative electrode mix slurry was prepared.

The negative electrode mix slurry was applied to a negative electrode collector made of a copper foil, dried at 80°C, and rolled with a rolling roller. Then a collecting tab was attached to prepare a negative electrode.

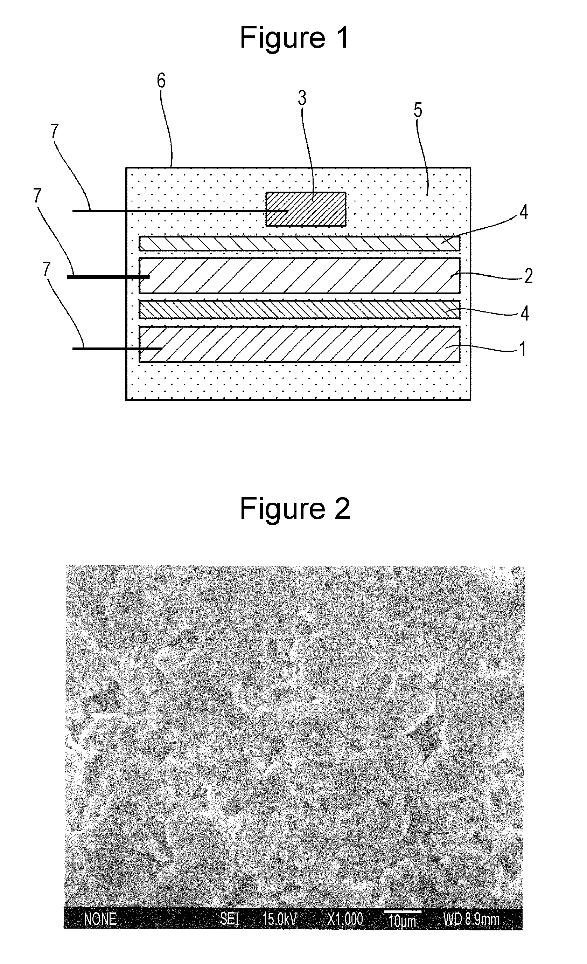

A test cell shown in Figure 1 was prepared by using the above-described negative electrode. In a glove box having an argon atmosphere, the test cell was prepared by using the negative electrode as a working electrode 1, and a counter electrode 2 and a reference electrode 3 composed of metallic lithium. Electrode tabs 7 were respectively attached to the working electrode 1, the counter electrode 2, and the reference electrode 3. A polyethylene separator 4 was placed between the working electrode 1 and the counter electrode 2 and another polyethylene separator 4 was placed between the working electrode 1 and the reference electrode 3 to form a stack. The resulting stack and a nonaqueous electrolyte solution 5 were sealed in a laminate container 6 constituted by an aluminum laminate to prepare a test cell A1.

A nonaqueous electrolyte solution prepared by dissolving lithium hexafluorophosphate (LiPF₆) in a 3:7 (vol) ethylene carbonate/ethyl methyl carbonate mixed solvent so that the LiPF₆ concentration was 1 mol/L was used as the nonaqueous electrolyte solution 5.

### (Example 2)

A test cell A2 was prepared as in Example 1 except that the mixing ratio (mass ratio) of the first negative electrode active material to the second negative electrode active material was changed to 10:90.

### (Example 3)

A test cell A3 was prepared as in Example 1 except that the mixing ratio (mass ratio) of the first negative electrode active material to the second negative electrode active material was changed to 30:70.

### (Example 4)

A test cell A4 was prepared as in Example 1 except that the mixing ratio (mass ratio) of the first negative electrode active material to the second negative electrode active material was changed to 50:50.

### (Example 5)

A test cell A5 was prepared as in Example 1 except that aluminum particles (produced by Kojundo Chemical Lab. Co., Ltd.) having an average particle diameter of 20 µm were used as the first negative electrode active material.

### (Example 6)

A test cell A6 was prepared as in Example 5 except that the mixing ratio (mass ratio) of the first negative electrode active material to the second negative electrode active material was changed to 30:70.

### (Example 7)

A test cell A7 was prepared as in Example 1 except that tin particles (produced by Kojundo Chemical Lab. Co., Ltd.) having an average particle diameter of 20 µm were used as the first negative electrode active material and the mixing ratio (mass ratio) of the first negative electrode active material to the second negative electrode active material was changed to 30:70.

### (Example 8)

A test cell A8 was prepared as in Example 1 except that the mixing ratio (mass ratio) of the first negative electrode active material to the second negative electrode active material was changed to 1:99.

### (Example 9)

A test cell A9 was prepared as in Example 5 except that the mixing ratio (mass ratio) of the first negative electrode active material to the second negative electrode active material was changed to 1:99.

### (Comparative Example 1)

A test cell X1 was prepared as in Example 1 except that a negative electrode was prepared without using the first negative electrode active material but with artificial graphite as the second negative electrode active material alone and this negative electrode was used.

### (Comparative Example 2)

A test cell X2 was prepared as in Example 1 except that silicon particles (average particle diameter: 10 µm) were used instead of zinc particles as the first negative electrode active material and that the mixing ratio (mass ratio) of the first negative electrode active material to the second negative electrode active material was changed to 30:70.

### [Evaluation of charge/discharge characteristics]

Test cells of Examples 1 to 9 and Comparative Examples 1 and 2 prepared as above were used to evaluate the charge/discharge characteristics as follows.

Each test cell was charged at room temperature at a 1.2 mA/cm² constant current until the potential reached 0 V (vs. Li/Li⁺) and then discharged at a 1.2 mA/cm² constant current until the potential reached 1.0 V (vs. Li/Li⁺). The initial discharge capacity and the initial average operation potential of the first cycle was determined for each test cell.

This charge/discharge cycle was repeated and the discharge capacity at the 30th cycle was determined for each test cell.

Table 1 shows the packing density of the negative electrode, the initial discharge capacity, the initial average operation potential, and the discharge capacity at the 30th cycle.

The packing density of the negative electrode was determined by dividing the mass of the electrode mix portion by the volume of the electrode mix portion.

**[Table 1]**

| | Battery | Materials of negative electrode active material (mass ratio) | | Negative electrode packing density (g/cm³) | Initial discharge capacity (mAh/cm³) | Initial average operation potential (V vs Li/Li⁺) | Discharge capacity at 30th cycle (mAh/cm³) |
|---|---|---|---|---|---|---|---|
| | | First active material | Second active material | | | | |
| Example 1 | A1 | Zn (5) | Artificial graphite (95) | 1.93 | 255.2 | 0.296 | 401.6 |
| Example 2 | A2 | Zn (10) | Artificial graphite (90) | 1.90 | 132.8 | 0.347 | 287.4 |
| Example 3 | A3 | Zn (30) | Artificial graphite (70) | 2.25 | 171.1 | 0.326 | 293.1 |
| Example 4 | A4 | Zn (50) | Artificial graphite (50) | 2.24 | 120.6 | 0.327 | 203.0 |
| Example 5 | A5 | Al (5) | Artificial graphite (95) | 1.85 | 371.0 | 0.292 | 365.2 |
| Example 6 | A6 | Al (30) | Artificial graphite (70) | 2.00 | 685.4 | 0.373 | 284.3 |
| Example 7 | A7 | Sn (30) | Artificial graphite (70) | 1.95 | 544.3 | 0.382 | 371.6 |
| Example 8 | A8 | Zn (1) | Artificial graphite (99) | 2.02 | 50.0 | 0.471 | 248.3 |
| Example 9 | A9 | Al (1) | Artificial graphite (99) | 2.05 | 122.7 | 0.368 | 143.5 |
| Comparative Example 1 | X1 | - | Artificial graphite (100) | 2.00 | 21.3 | 0.610 | 103.2 |
| Comparative Example 2 | X2 | Si (30) | Artificial graphite (70) | 1.84 | 1055.9 | 0.406 | 5.9 |

As shown in Table 1, in Examples 1 to 9 where the negative electrode active material is a mixture of a first negative electrode active material and a second negative electrode active material according to the present invention exhibit low initial average operation potential and significantly improved initial discharge capacity compared to Comparative Example 1 where only the second negative electrode active material, i.e., artificial graphite, is used as the negative electrode active material. This indicates that good high-rate charge/discharge characteristics can be obtained. In Comparative Example 2 where silicon is used as the first negative electrode active material, the initial discharge capacity is high but the initial average operation potential is high compared to Examples 1 to 9, and the discharge capacity at the 30th cycle is significantly degraded.

In contrast, in Examples 1 to 9 according to the present invention, the discharge capacity at the 30th cycle is high. This shows that good charge/discharge cycle property can be obtained.

These results show that good efficiency charge/discharge characteristics and good charge/discharge cycle property can be obtained according to the present invention even when the packing density of the negative electrode is increased.

The results in Table 1 clearly show that the content of the metal particles serving as the first negative electrode active material is preferably in the range of 1 to 50 mass%, more preferably in a the range of 1 to 30 mass%, and most preferably in the range of 5 to 30 mass% relative to the total of the metal particles, i.e., the first negative electrode active material, and the carbon material, i.e., the second negative electrode active material.

### [Investigating the influence of negative electrode packing density]

### (Example 10 and Example 11)

The negative electrode mix slurry was applied to a collector, dried, and rolled with a rolling roller while adjusting the rolling pressure to prepare a negative electrode having a negative electrode packing density of 2.06 g/cm³ (Example 10) and a negative electrode having a negative electrode packing density of 1.59 g/cm³ (Example 11). Test cells B1 and B2 were prepared as in Example 2 except that these negative electrodes were used. The charge/discharge characteristics of the test cells B1 and B2 were evaluated as follows.

At room temperature, each test cell was charged at a 0.2 mA/cm² constant current until the potential reached 0 V (vs. Li/Li⁺) and then discharged at a 0.2 mA/cm² constant current until the potential reached 1.0 V (vs. Li/Li⁺). The initial discharge capacity and the initial average operation potential at the first cycle was determined for each test cell. This charge/discharge cycle was repeated and the discharge capacity at the 30th cycle was determined for each test cell. The results are shown in Table 2.

**[Table 2]**

| | Battery | Materials of negative electrode active material (mass ratio) | | Negative electrode packing density (g/cm³) | Initial discharge capacity (mAh/cm³) | Initial average operation potential (V vs Li/Li⁺) | Discharge capacity at 30th cycle (mAh/cm³) |
|---|---|---|---|---|---|---|---|
| | | First active material | Second active material | | | | |
| Example 10 | B1 | Zn (10) | Artificial graphite (90) | 2.06 | 605.1 | 0.175 | 579.2 |
| Example 11 | B2 | Zn (10) | Artificial graphite (90) | 1.59 | 479.3 | 0.171 | 460.5 |

The results in Table 2 clearly show that in Example 10 where the negative electrode packing density is increased, good discharge capacity is exhibited at the first and 30th cycle compared to Example 11 where the negative electrode packing density is low.

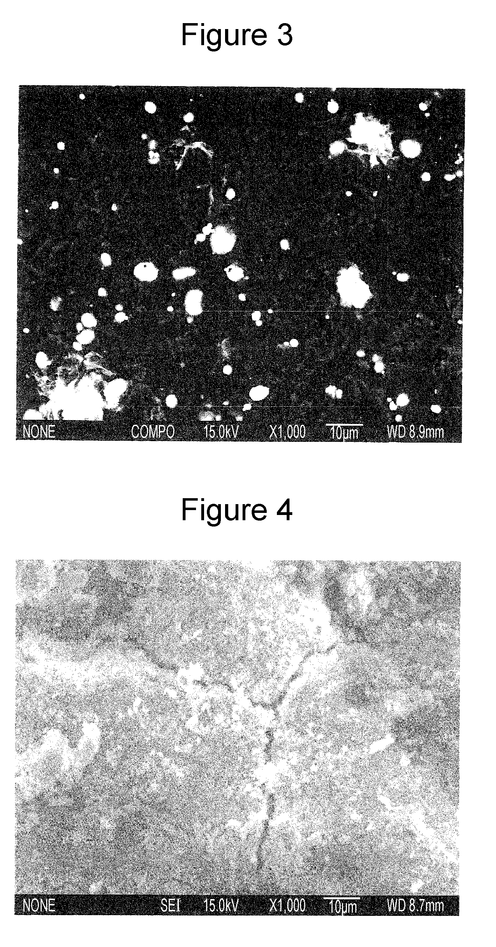

Figure 2 is a scanning electron microscope (SEM) image of a surface of a negative electrode after 30th charge/discharge cycle magnified by 1000 in Example 3. Figure 3 is a SEM backscattered electron image of a surface of a negative electrode after the 30th charge/discharge cycle magnified by 1000 in Example 3. In the backscattered electron image of Figure 3, graphite is indicated in black and zinc is indicated in white. In Example 3, as shown in Figures 2 and 3, appropriate passages for the electrolyte solution are formed in the surface of the negative electrode.

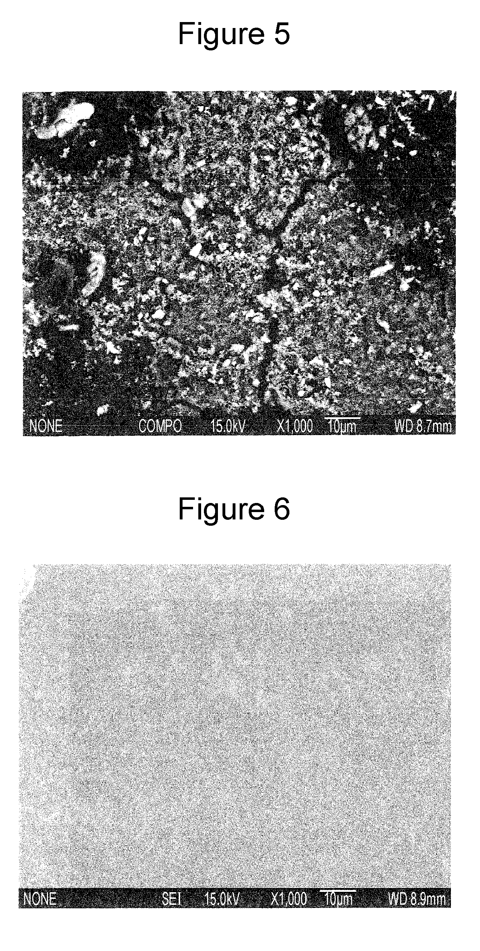

Figure 4 is a scanning electron microscope (SEM) image of a surface of a negative electrode after 30th charge/discharge cycle magnified by 1000 in Example 6. Figure 5 is a SEM backscattered electron image of a surface of a negative electrode after the 30th charge/discharge cycle magnified by 1000 in Example 6. As shown in Figures 4 and 5, cracks suitable as passages for the electrolyte solution are formed in the surface of the negative electrode. In the backscattered electron image of Figure 5, graphite is indicated in black and aluminum is indicated in white.

Figure 6 is a SEM image of a surface of a negative electrode after 30th charge/discharge cycle magnified by 1000 in Comparative Example 1. As shown in Figure 6, when only graphite is used as the negative electrode active material, the negative electrode active material becomes oriented and passages for the electrolyte solution such as those shown in Figures 2 to 5 are not formed.

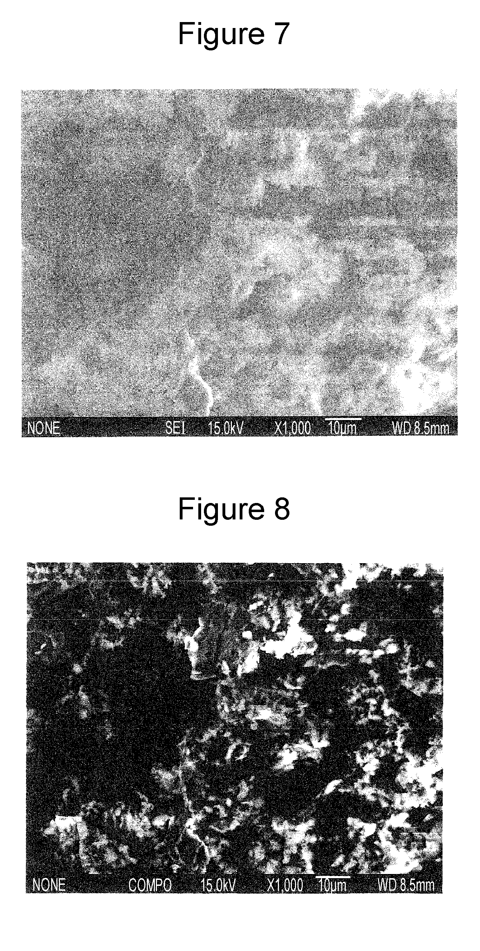

Figure 7 is a scanning electron microscope (SEM) image of a surface of a negative electrode after 30th charge/discharge cycle magnified by 1000 in Comparative Example 2. Figure 8 is a SEM backscattered electron image of a surface of a negative electrode after the 30th charge/discharge cycle magnified by 1000 in Comparative Example 2. In the backscattered electron image of Figure 8, graphite is indicated in black and silicon is indicated in white. As shown in Figures 7 and 8, extensive irregularities are formed in the surface of the negative electrode and the electrode plate structure is significantly changed. Thus, the electrical conductivity is presumably low.

These results show that when a mixture of metal particles and a carbon material is used as the negative electrode active material according to the present invention, appropriate cracks are formed in the carbon material and serve as passages for the electrolyte solution so that good high-rate charge/discharge characteristics and good charge/discharge cycle property are obtained.

### (Examples 12 to 16 and Comparative Examples 3 to 5)

Lithium secondary batteries were prepared by using a positive electrode of a lithium secondary battery and the negative electrode of the present invention to investigate the influence of the negative electrode packing density.

### (Example 12)

### [Preparation of positive electrode]

To a positive electrode active material composed of lithium cobalt oxide, a carbon material serving as a conductive agent and polyvinylidene fluoride serving as a binder were mixed so that the ratio of the active material to the conductive agent to the binder was 95:2.5:2.5 on a mass basis. The resulting mixture was added to N-methyl-2-pyrrolidone serving as a dispersing medium and the resulting mixture was kneaded to prepare a positive electrode slurry.

The positive electrode slurry was applied to an aluminum foil serving as a collector, dried at 110°C, and rolled with a rolling roller. Then a collecting tab was attached to prepare a positive electrode.

### [Preparation of negative electrode]

The same spherical zinc as in Example 1 was used as the first negative electrode active material and the same artificial graphite as in Example 1 was used as the second negative electrode active material. Zinc particles and artificial graphite were mixed with each other at a mass ratio (zinc:artificial graphite) of 10:90 to prepare a negative electrode active material. This negative electrode active material and styrene-butadiene rubber serving as a binder were added to an aqueous solution of carboxymethyl cellulose as a thickener in water and the resulting mixture was kneaded to prepare a negative electrode slurry. The mass ratio of the negative electrode active material to the binder to the thickener was 97.5:1.0:1.5.

This negative electrode slurry was applied to a copper foil serving as a collector, dried at 80°C, rolled with a rolling roller. Then a collecting tab was attached to prepare a negative electrode.

The negative electrode packing density was adjusted to 1.8 g/cm³ by controlling the pressure during rolling with the rolling roller.

### [Preparation of electrolyte solution]

Into a solvent prepared by mixing ethylene carbonate (EC) and methyl ethyl carbonate (MEC) at a volume ratio of 3:7, lithium hexafluorophosphate (LiPF₆) was dissolved so that the LiPF₆ concentration was 1 mol/L to prepare an electrolyte solution.

### [Preparation of battery]

The positive electrode and the negative electrode prepared as above were arranged to face each other with a separator therebetween and wound to prepare a roll. The roll and the electrolyte solution were sealed in an aluminum laminate in a glove box in an argon (Ar) atmosphere to prepare a nonaqueous electrolyte secondary battery C1. The standard size of this battery was set to 3.6 mm in thickness x 3.5 cm in width x 6.2 cm in length. The charge capacity ratio (negative electrode/positive electrode) at a portion where the positive electrode faces the negative electrode was designed to be 1.1 when the battery was charged at 4.2 V.

### (Example 13)

A nonaqueous electrolyte secondary battery C2 was prepared as in Example 12 except that the negative electrode packing density was 2.0 g/cm³.

### (Example 14)

A nonaqueous electrolyte secondary battery C3 was prepared as in Example 12 except that the mixing ratio of zinc serving as the first negative electrode active material to the artificial graphite serving as the second negative electrode active material was changed to 5:95 (zinc:artificial graphite) and the negative electrode packing density was changed to 1.6 g/cm³.

### (Example 15)

A nonaqueous electrolyte secondary battery C4 was prepared as in Example 14 except that the negative electrode packing density was changed to 1.8 g/cm³.

### (Example 16)

A nonaqueous electrolyte secondary battery C5 was prepared as in Example 14 except that the negative electrode packing density was changed to 2.0 g/cm³.

### (Comparative Example 3)

A nonaqueous electrolyte secondary battery Z1 was prepared as in Example 12 except that a negative electrode was prepared without using the first negative electrode active material but only with artificial graphite as the second negative electrode active material and that the negative electrode packing density was changed to 1.6 g/cm³.

### (Comparative Example 4)

A nonaqueous electrolyte secondary battery Z2 was prepared as in Comparative Example 3 except that the negative electrode packing density was changed to 1.8 g/cm³.

### (Comparative Example 5)

A nonaqueous electrolyte secondary battery Z5 was prepared as in Comparative Example 3 except that the negative electrode packing density was changed to 2.0 g/cm³.

### [Evaluation of cycle property]

The cycle property of the nonaqueous electrolyte secondary batteries prepared was evaluated as follows.

Each nonaqueous electrolyte secondary battery was charged at a 650 mA constant current until the voltage reached 4.2 V, then charged at a 4.2 V constant voltage until the current value reached 32 mA, and then discharged at a 650 mA constant current until the voltage reached 2.75 V, and the discharge capacity (mAh) of the battery was measured. This charging and discharging was assumed to be one cycle. The ratio of the discharge capacity at the 200th cycle to the discharge capacity at the first cycle was determined and indicated in Table 3 under the column of "Discharge capacity retention ratio at 200th cycle (%)".

**[Table 3]**

| | Battery | Materials of negative electrode active material (mass ratio) | | Negative electrode packing density (g/cm³) | Discharge capacity retention ratio at 200th cycle (%) |
|---|---|---|---|---|---|
| | | First active material | Second active material | | |
| Example 12 | C1 | Zn (10) | Artificial graphite (90) | 1.8 | 86.6 |
| Example 13 | C2 | Zn (10) | Artificial graphite (90) | 2.0 | 87.3 |
| Example 14 | C3 | Zn (5) | Artificial graphite (95) | 1.6 | 86.1 |
| Example 15 | C4 | Zn (5) | Artificial graphite (95) | 1.8 | 87.4 |
| Example 16 | C5 | Zn (5) | Artificial graphite (95) | 2.0 | 88.2 |
| Comparative Example 3 | Z1 | - | Artificial graphite (100) | 1.6 | 86.0 |
| Comparative Example 4 | Z2 | - | Artificial graphite (100) | 1.8 | 79.1 |
| Comparative Example 5 | Z3 | - | Artificial graphite (100) | 2.0 | 77.7 |

The results in Table 3 clearly show that in Comparative Examples 3 to 5 where only the second negative electrode active material, artificial graphite, is used as the negative electrode active material, the discharge capacity retention ratio decreases with the increase in negative electrode packing density and the cycle property is also degraded. In contrast, in Examples 12 to 16 where zinc particles serving as the first negative electrode active material according to the present invention are used in combination with the second negative electrode active material, the cycle property is not degraded but rather improved with the increase in negative electrode packing density.

This is presumably due to the following reason. When zinc particles are not contained, the passages for the electrolyte solution are lost as the negative electrode packing density increases and the deficiency of the electrolyte solution occurs in the negative electrode active material, thereby degrading the cycle property. However, when zinc particles are contained, passages for the electrolyte solution are secured, and the increase in negative electrode packing density shortens the average distance between the negative electrode active material particles locally and improves the electrical conductivity. As a result, the cycle property is improved.

### [Investigating the positive electrode active material]

### (Example 17)

A nonaqueous electrolyte secondary battery D1 was prepared as in Example 12 except that LiNi_{1/3}Co_{1/3}Mn_{1/3}O₂ was used as the positive electrode active material and the negative electrode packing density was changed to 2.1 g/cm³.

### (Example 18)

A nonaqueous electrolyte secondary battery D2 was prepared as in Example 12 except that the same lithium cobalt oxide as in Example 12 was used as the positive electrode active material and the negative electrode packing density was changed to 2.1 g/cm³.

### [Evaluation of cycle property]

The nonaqueous electrolyte secondary batteries D1 and D2 were subjected to the charge/discharge cycle test under the same conditions as those described above and the discharge capacity at the 500th cycle was measured. The results are indicated in Table 4.

**[Table 4]**

| | Battery | Materials of negative electrode active material (mass ratio) | | Negative electrode packing density (g/cm³) | Positive electrode type | Discharge capacity at 500th cycle (mAh) |
|---|---|---|---|---|---|---|
| | | First active material | Second active material | | | |
| Example 17 | D1 | Zn (10) | Artificial graphite (90) | 2.1 | LiNiMnCoO₂ | 520 |
| Example 18 | D2 | Zn (10) | Artificial graphite (90) | 2.1 | LiCoO₂ | 491 |

The results in Table 4 clearly show that the battery D1 of Example 17 exhibits better charge/discharge cycle property than the battery D2 of Example 18. This is presumably because the utility ratio of the negative electrode is decreased by using a lithium nickel manganese cobalt complex oxide having an initial efficiency lower than that of lithium cobalt oxide and a high battery capacity can be obtained after the charge/discharge cycles.

**Reference Signs List**

| | |
|---|---|
| 1 | working electrode |
| 2 | counter electrode |
| 3 | reference electrode |
| 4 | separator |
| 5 | nonaqueous electrolyte solution |
| 6 | laminate container |
| 7 | electrode tab |

## Claims

1. A nonaqueous electrolyte secondary battery comprising a positive electrode containing a positive electrode active material, a negative electrode containing a negative electrode active material, and a nonaqueous electrolyte,
wherein the negative electrode active material is a mixture of a carbon material and metal particles of at least one selected from zinc, aluminum, tin, calcium, and magnesium.

2. The nonaqueous electrolyte secondary battery according to Claim 1, wherein the metal particles are metal particles of at least one selected from zinc and aluminum.

3. The nonaqueous electrolyte secondary battery according to Claim 1 or 2, wherein the metal particles are contained in an amount of 1 to 50 mass% relative to the total of the metal particles and the carbon material.

4. The nonaqueous electrolyte secondary battery according to Claim 1 or 2, wherein the metal particles are contained in an amount of 1 to 30 mass% relative to the total of the metal particles and the carbon material.

5. The nonaqueous electrolyte secondary battery according to any one of Claims 1 to 4, wherein the negative electrode has a packing density of 1.7 g/cm³ or more and 3.0 g/cm³ or less.

6. The nonaqueous electrolyte secondary battery according to any one of Claims 1 to 4, wherein the negative electrode has a packing density of 1.8 g/cm³ or more and 2.5 g/cm³ or less.

7. The nonaqueous electrolyte secondary battery according to any one of Claims 1 to 6, wherein the positive electrode active material contains a lithium nickel cobalt manganese complex oxide.

8. The nonaqueous electrolyte secondary battery according to any one of Claims 1 to 7, wherein the metal particles have an average particle diameter of 0.25 to 50 µm.

9. The nonaqueous electrolyte secondary battery according to any one of Claims 1 to 7, wherein the metal particles have an average particle diameter of 1 to 20 µm.
